(19) Europäisches Patentamt
European Patent Office
Office européen des brevets

(11) EP 3 424 967 A1

(12) # EUROPÄISCHE PATENTANMELDUNG

(43) Veröffentlichungstag:
**09.01.2019 Patentblatt 2019/02**

(51) Int Cl.:
***C08G 18/50*** *(2006.01)* ***C08G 65/24*** *(2006.01)*
***C08G 65/26*** *(2006.01)* ***C08G 18/44*** *(2006.01)*

(21) Anmeldenummer: **17180273.9**

(22) Anmeldetag: **07.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON FUNKTIONALISIERTEN POLYOXYALKYLENPOLYOLEN**

(57) Ein Verfahren zur Herstellung halogenhaltiger Polyoxyalkylenpolyole, umfassend den Schritt der Reaktion eines Alkylenoxids mit Kohlendioxid in Gegenwart einer H-funktionellen Starterverbindung und eines Doppelmetallcyanid-Katalysators, wobei die Reaktion weiterhin in Gegenwart eines $\alpha$,$\beta$-Epoxy-$\gamma$-halogenalkans durchgeführt wird.

EP 3 424 967 A1

## Beschreibung

Die vorliegende Erfindung betrifft ein Verfahren zur Herstellung von Polyoxyalkylenpolyolen, umfassend den Schritt der Reaktion eines Alkylenoxids mit Kohlendioxid in Gegenwart einer H-funktionellen Starterverbindung und eines Doppelmetallcyanid-Katalysators, wobei die Reaktion weiterhin in Gegenwart eines $\alpha,\beta$-Epoxy-$\gamma$-halogenalkans durchgeführt wird..

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al., Copolymerization of Carbon Dioxide and Alkylenoxide with Organometallic Compounds; Die Makromolekulare Chemie 130, 210-220, 1969). Diese Reaktion ist ökologisch sehr vorteilhaft, da sie die Umsetzung eines Treibhausgases wie $CO_2$ zu einem Polymer darstellt.

Ein Beispiel für Arbeiten aus jüngerer Zeit ist die Patentanmeldung WO 2015/14732 A1, in der ein Verfahren zur Herstellung von Polyethercarbonatpolyolen offenbart wird. Ein oder mehrere Alkylenoxid(e) und Kohlendioxid werden an eine oder mehrere H- funktionelle Startersubstanz(en) in Gegenwart eines Doppelmetallcyanid-Katalysators oder in Gegenwart eines Metallkomplexkatalysators auf Basis der Metalle Zink und/oder Cobalt angelagert, wobei ein Reaktionsgemisch enthaltend das Polyethercarbonatpolyol erhalten wird. Zu dem erhaltenen Reaktionsgemisch enthaltend das Polyethercarbonatpolyol wird mindestens eine Komponente K gegeben, wobei Komponente K ausgewählt ist aus mindestens einer Verbindung, die eine Phosphor- Sauerstoff-Bindung enthält, oder einer Verbindung des Phosphors, die durch Reaktion mit OH-funktionellen Verbindungen eine oder mehrere P-O-Bindungen ausbilden kann.

Epichlorhydrin wird zur Herstellung von Kautschuk verwendet. Man unterscheidet hierbei drei verschiedene Elastomertypen: das Epichlorhydrin-Homopolymer (CO), das Epichlorhydrin/Ethylenoxid-Copolymer (ECO) und Epichlorhydrin-Terpolymere, welche aus Epichlorhydrin, Ethylenoxid und einem weiteren Monomer, typischerweise einem ungesättigtem Epoxid, wie Allylglycidylether, gebildet werden. Epichlorhydrin-basierte Kautschuke zeichnen sich unter anderem durch ihre Beständigkeit gegenüber Ölen, Treibstoffen und Chemikalien aus.

Ein weiterer Gegenstand der Forschung ist die Copolymerisation von Epichlorhydrin als funktionalisiertem Epoxid mit Kohlendioxid. Donald J. Darensbourg et al. beschreiben in J. Am. Chem. Soc. 2011, 133, 15191-15199 die streng alternierende Coplymerisation von Kohlendioxid und Epichlorhydrin in Gegenwart von (salen)Cobalt(III)-Katalysatoren. In Macromolecules 2013, 46, 2128-2133 berichten Donald J. Darensbourg et al. über ein kristallines Epichlorhydrin-$CO_2$-Copolymer via Co(III)-vermittelter stereospezifischer Polymerisation.

In Polymer (2013) 54(23) 6357-6362 wird die Umsetzung von Epichlorhydrin unter DMC-Katalyse zu einem Polymer beschrieben. Der Polyether weist eine Tg von -38,6°C auf, was für einige PU-Anwendungen zu hoch ist. Ebenfalls beschrieben ist die Umsetzung von Epichlorhydrin mit Kohlendioxid unter DMC-Katalyse. Die $CO_2$ Einbaurate schwankt zwischen 37,8 und 70,7 %, die $T_g$s zwischen -16,9 und +31,2°C, zu hoch für PU-Anwendungen. Der Einsatz hydroxyfunktioneller Starter wird nicht genannt, wodurch die Molmassen nicht steuerbar sind. Es werden 0,67 Gew.-% DMC Katalysator eingesetzt, eine große Menge an Katalysator, die, falls sie nicht entfernt wird, Eigenschaften wie Hydrolysebeständigkeit oder optische Klarheit, beeinträchtigen kann. Die Reaktion verläuft nur bei niedrigen Temperaturen zufriedenstellend, was lange Reaktionszeiten von 48-132 h nach sich zieht. Auch ist die Zersetzungstemperatur von 250°C nicht zufriedenstellend.

RCS Advances (2014) 4(42) 21765-21771 (bei Bayer bestellt). Durch Verwendung von optisch aktivem Epichlorhydrin wurden teilkristalline Polyether erhalten, die für Polyol-Anwendungen untauglich ist. Der Einsatz hydroxyfunktioneller Starter wird nicht genannt.

In Macromolecules (2016) 49 (8) 2971-2976 wird die Synthese eines alternierenden Copolymers aus optional enantiomeren reinen Epichlorhydrin und COS in Gegenwart von (salen)Cr(III)-Konmplexen beschrieben. Bei Verwendung von enantiomeren reinem Epichlorhydrin wird ein teilkristallines Polymer erhalten mit einem Schmelzpunkt von 96.7°C erhalten, was für PU-Anwendungen ungeeignet ist aber auch die Glasübergangstemperatur Tg von 15.6°C ist zu hoch, und die Produkte enthalten alle Schwefel, was für viele Anwendungen unerwünscht ist.

Die Synthese eines alternierenden CO2-Epichlorhydrin-Copolymers unter Zinkglutarat-Katalyse wird in Macromolucular Rapid Communications (2016) 37 (9) 788-793 beschrieben. Die Glasübergangstemperatur Tg beträgt 44°C, was für PU-Anwendungen ungeeignet ist.

In J. Mol. Catal. A (2013) 379 38-45 beschreibt die Synthese des cyclischen Carbonats aus Epichlorhydrin und Kohlendioxid unter Einsatz von DMC-Katalysatoren und quaternären Ammoniumsalzen als Cokatalysatoren.

Es wäre wünschenswert, Epichlorhydrin oder andere $\alpha,\beta$-Epoxy-$\gamma$-halogenalkane in Alkylenoxidbasierte Polyethercarbonate einzubinden. Derart funktionalisierte Polyole können als Rohstoffe zur Erhöhung der Beständigkeit oder Verbesserung anderer Eigenschaften von Polyurethanpolymeren dienen. Ebenfalls können solche funktionalisierten Polyole als Intermediate für die Einführung weiterer Funktionen in die Polyole dienen.

Im Stand der Technik wird Epichlorhydrin häufig als ein mögliches Monomer zur Herstellung von Polyethercarbonat-Polyolen genannt. Dieses geschieht in Form langer Listen, in der viele verschiedene für die jeweils beanspruchte Erfindung als geeignet angesehene Alkylenoxide aufgezählt werden. Der Einsatz von Epichlorhydrin als Comonomer

neben unfunktionalisierten Alkylenoxiden bei der Polyethercarbonatsynthese ist bislang nicht beschrieben worden.

Die vorliegende Erfindung hat sich daher die Aufgabe gestellt, ein Verfahren bereitzustellen, mit dem solche an den Seitenketten funktionalisierte Polyoxyalkylenpolyolen erhalten werden können, bei Verwendung niedrigerer Katalysatormengen und in kürzeren Reaktionszeiten Erfindungsgemäß gelöst wird die Aufgabe durch ein Verfahren zur Herstellung von Polyoxyalkylenpolyolen, umfassend den Schritt der Reaktion eines Alkylenoxids mit Kohlendioxid in Gegenwart einer H-funktionellen Starterverbindung und eines Doppelmetallcyanid-Katalysators, wobei die Reaktion weiterhin in Gegenwart eines α,β-Epoxy-γ-halogenalkans durchgeführt wird.

Die Reaktion wird beispielhaft anhand des folgenden Reaktionsschemas gezeigt:

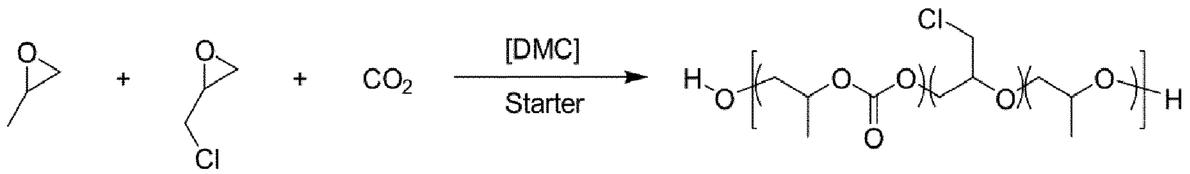


Es wurde nun gefunden, dass sich α,β-Epoxy-γ-halogenalkane und andere Epoxide mit $CO_2$ unter DMC-Katalyse copolymerisieren lassen, wobei ein an der Seitenkette halogensubstituiertes Polyoxyalkylenpolyol entsteht, das mit einem Phosphinit, Phosphonit und/oder Phosphit in einer Michaelis-Arbosov-Reaktion zu einem phosphorhaltigen Polyoxyalkylenpolyol umgesetzt werden kann.

Erfindungsgemäß gelöst wird die Aufgabe durch ein Verfahren zur Herstellung von Polyethercarbonatpolyolen umfassend die Schritte:

(α) Vorlegen eines Katalysators und

(αα) eines Suspensionsmittels, das keine H-funktionellen Gruppen enthält
und/oder

(αβ) einer H-funktionellen Starterverbindung

(β) Zudosieren mindestens eines Epoxides in Gegenwart von Kohlendioxid, wobei das oder die in Schritt (γ) zudosierten Epoxide von dem im Schritt (β) zudosierten Epoxid oder zudosierten Epoxiden gleich oder verschieden sein können und wobei der Schritt (β) zwischen Schritt (α) und Schritt (γ) durchgeführt wird

(γ) Zudosieren von Kohlendioxid und mindestens zweier Alkylenoxide, wobei diese Alkylenoxide von dem im Schritt (β) zudosierten Alkylenoxid oder zudosierten Alkylenoxiden gleich oder verschieden sein können,

wobei mindestens eines der in der Stufe (γ) zudosierten Alkylenoxide ein α,β-Epoxy-γ-halogenalkan und mindestens eines der in Stufe (γ) zudosierten Alkylenoxide halogenfrei ist und wobei weiterhin für den Fall, dass in Schritt (α) keine H-funktionelle Starterverbindung vorgelegt wurde, Schritt (γ) das Zudosieren einer H-funktionellen Starterverbindung umfasst und der Katalysator ein Doppelmetallcyanid-Katalysator ist.

Eine bevorzugte Ausführungsform des erfindungsgemäß einsetzbaren Verfahrens zur Herstellung der Polyethercarbonatpolyole aus einer oder mehreren H-funktionellen Starterverbindungen, mehreren Alkylenoxiden und Kohlendioxid in Gegenwart eines DMC-Katalysators ist dadurch gekennzeichnet, dass

(α) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, der H-funktionellen Starterverbindung oder dem Gemisch von mindestens zwei H-funktionellen Starterverbindungen vor oder nach der 1. Aktivierungsstufe zugesetzt wird,

(β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt wird, wobei die Zugabe einer Teilmenge an Alkylenoxiden gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] für den Aufbau einer Polyethercarbonatpolyol-Polymerkette ein Gemisch mehrerer Alkylenoxide, wobei mindestens eines ein α,β-Epoxy-γ-halogenalkan ist, sowie Kohlendioxid zu der aus Schritt (β) resultierenden Mischung fortwährend zudosiert werden, wobei die für die Terpolymerisation eingesetzten Alkylenoxide gleich oder von den im Schritt (β) eingesetzten Alkylenoxiden verschieden sein können.

Zu Schritt (α):

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend Suspensionsmittel, das keine H-funktionellen Gruppen enthält, die H-funktionelle Starterverbindung, das Gemisch aus einem Suspensionsmittel, das keine H-funktionellen Gruppen enthält und der H-funktionellen Starterverbindung oder das Gemisch von mindestens zwei H-funktionellen Starterverbindungen zugesetzt. Es können auch mehrere Katalysatoren aus der Gruppe der DMC-Katalysatoren eingesetzt werden.

Gegenstand einer bevorzugten Ausführungsform ist ein Verfahren, wobei in Schritt (α)

(α1) in einem Reaktor der DMC-Katalysator und Suspensionsmittel, das keine H-funktionellen Gruppen enthält, und/oder eine oder mehrere H-funktionelle Starterverbindungen vorgelegt werden,

(α2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe].

Gegenstand einer weiteren bevorzugten Ausführungsform ist ein Verfahren, wobei in Schritt (α)

(α1) Suspensionsmittel, das keine H-funktionellen Gruppen enthält, die H-funktionelle Starterverbindung und/oder ein Gemisch aus mindestens zwei H-funktionellen Starterverbindungen, gegebenenfalls unter Inertgasatmosphäre (beispielsweise Stickstoff oder Argon), unter einer Atmosphäre aus Inertgas-Kohlendioxid-Gemisch oder unter einer reinen Kohlendioxid-Atmosphäre, besonders bevorzugt unter einer Inertgasatmosphäre vorgelegt wird und

(α2) in das resultierende Gemisch aus DMC-Katalysator und Suspensionsmittel, das keine H-funktionellen Gruppen enthält, und/oder einer oder mehrerer H-funktioneller Starterverbindungen bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid, besonders bevorzugt Inertgas (beispielsweise Stickstoff oder Argon) eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe],

wobei der Doppelmetallcyanid-Katalysator zu dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen in Schritt (α1) oder unmittelbar anschließend in Schritt (α2) zugesetzt wird.

Der DMC-Katalysator kann in fester Form oder in einem Suspensionsmittel, das keine H-funktionellen Gruppen enthält, oder einer oder mehreren H-funktionellen Starterverbindungen suspendiert zugegeben werden. Wird der DMC-Katalysator als Suspension zugegeben, wird diese bevorzugt in Schritt (α1) dem Suspensionsmittel und/oder der einen oder mehreren H-funktionellen Starterverbindungen zugefügt.

Zu Schritt (β):

Der Schritt (β) der zweiten Aktivierungsstufe kann in Gegenwart von $CO_2$ und/oder Inertgas (wie beispielsweise Stickstoff oder Argon) erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des oder der Alkylenoxide kann bei einem beliebig zuvor gewählten Vordruck erfolgen. Der Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Alkylenoxides der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer weiteren Ausführungsform kann die bei der Aktivierung in Schritt (β) eingesetzte Menge an einem oder mehreren Alkylenoxiden 0,1 bis 25,0 Gew.%, bevorzugt 1,0 bis 20,0 Gew.%, besonders bevorzugt 2,0 bis 16,0 Gew.%, bezogen auf die im Schritt (α) eingesetzte Menge an Suspensionsmittel, das keine H-funktionellen Gruppen enthält, oder H-funktioneller Starterverbindung betragen. Das Alkylenoxid kann in einem Schritt oder schrittweise in mehreren Teilmengen zugegeben werden.

In einer zusätzlichen Ausführungsform der Erfindung werden bei der Aktivierung in Schritt (β) eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt [zweite Aktivierungsstufe]. Diese Zugabe einer Teilmenge an Alkylenoxiden kann gegebenenfalls in Gegenwart von $CO_2$ und/oder Inertgas erfolgen. Der Schritt (β) kann auch mehrfach erfolgen. Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt.

Im zweiten Aktivierungsschritt kann das oder die Alkylenoxide beispielsweise in einer Portion, innerhalb von 1 bis 15 Minuten oder vorzugsweise innerhalb von 5 bis 10 Minuten zugegeben werden. Die Dauer des zweiten Aktivierungsschritts beträgt bevorzugt 15 bis 240 Minuten, besonders bevorzugt 20 bis 60 Minuten.

Zu Schritt (γ):

Die Dosierung der halogenfreien und halogenhaltigen Alkylenoxide sowie des Kohlendioxids kann simultan, wechselweise oder sequentiell erfolgen, wobei die Zugabe des halogenhaltigen Alkylenoxids nur in Gegenwart von $CO_2$ erfolgt. Vorzugsweise beginnt die Dosierung von halogenhaltigem Alkylenoxid erst, wenn mindestens 10-15% der Epoxidmenge zugeben wurde. Die benötigte Kohlendioxidmenge kann auf einmal oder über die Reaktionszeit dosiert zugegeben werden. Es ist möglich, während der Zugabe der Alkylenoxide den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des oder der Alkylenoxide und des $CO_2$ kann simultan, wechselweise oder sequentiell zur Kohlendioxid Dosierung erfolgen. Es ist möglich, das oder die Alkylenoxide mit einer konstanten Dosierrate zu dosieren oder die Dosierrate kontinuierlich oder schrittweise zu steigern oder zu senken oder das oder die Alkylenoxide portionsweise zuzugeben. Bevorzugt wird das Alkylenoxid mit konstanter Dosierrate dem Reaktionsgemisch zugegeben. Mehrere Alkylenoxide können einzeln oder als Gemisch zudosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige niedrigviskose Polyethercarbonatpolyole mit Seitenketten zu synthetisieren.

Vorzugsweise wird ein Überschuss an Kohlendioxid bezogen auf die berechnete Menge an benötigtem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der niedrigviskosen Polyethercarbonatpolyole mit Seitenketten als vorteilhaft erwiesen. Es ist möglich, das Kohlendioxid dem Reaktionsbehälter kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Alkylenoxide ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,

(ii) Verwendung eines Hohlwellenrührers,

(iii) eine Kombination aus den Dosierungen gemäß (i) und (ii), und/oder

(iv) Begasung über die Flüssigkeitsoberfläche durch Einsatz mehrstufiger ausgeführter Rührorgane.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchtes Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Alkylenoxid, wieder in das Reaktionsgemisch gemäß (i), (ii), (iii) und/oder (iv) eingeleitet.

Bevorzugt wird der Druckabfall, welcher über Einbau des Kohlendioxids und der Alkylenoxide bei der Terpolymerisation in das Reaktionsprodukt entsteht, über frisch zudosiertes Kohlendioxid ausgeglichen.

Die Einleitung der Alkylenoxide kann separat oder zusammen mit dem $CO_2$ sowohl über die Flüssigkeitsoberfläche oder direkt in die flüssige Phase erfolgen. Bevorzugt erfolgt die Einleitung der Alkylenoxide direkt in die flüssige Phase, da dies den Vorteil hat, dass eine rasche Durchmischung des eingebrachten Alkylenoxides mit der flüssigen Phase erfolgt und so lokale Konzentrationsspitzen von Alkylenoxiden vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte (α), (β) und (γ) in unterschiedlichen Reaktoren durchgeführt, kann für jeden Schritt ein unterschiedlicher Reaktortyp verwendet werden.

Polyethercarbonatpolyole mit Seitenketten können in einem rückvermischten Reaktor, wie einem Rührkessel oder einem Schlaufenreaktor hergestellt werden, wobei der Rührkessel oder Schlaufenreaktor je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxides zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während der zweiten Aktivierungsstufe (Schritt β) beträgt vorzugsweise > 0 bis < 100 Gew.%, besonders bevorzugt > 0 bis ≤ 50 Gew.%, höchst bevorzugt > 0 bis ≤ 20 Gew.% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis ≤ 40 Gew.%, besonders bevorzugt > 0 bis ≤ 25 Gew.%, höchst bevorzugt > 0 bis < 15 Gew.% (jeweils bezogen auf das Gewicht der Reaktionsmischung).

Eine weitere Ausführungsform im Rührkessel für die Copolymerisation (Schritt γ) ist dadurch gekennzeichnet, dass auch eine oder mehrere H-funktionelle Starterverbindungen während der Reaktion kontinuierlich in den Reaktor zudosiert werden können. Die Menge der H-funktionellen Starterverbindungen, die während der Reaktion kontinuierlich in den Reaktor zudosiert werden, beträgt bevorzugt mindestens 20 mol-% Äquivalente, besonders bevorzugt 70 bis 95 mol-% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol-% Äquivalente, besonders bevorzugt 95 bis 100 mol-% Äquivalente (jeweils bezogen auf die gesamte Menge an H-funktionellen Starterverbindungen).

In einer bevorzugten Ausführungsform wird die gemäß den Schritten (α) und (β) aktivierte Katalysator-Starter-Mischung in demselben Reaktor weiter mit Alkylenoxiden und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit Alkylenoxiden und Kohlendioxid umgesetzt. In einer weiteren bevorzugten Ausführungsform wird die gemäß dem Schritt (α) vorbereitete

Mischung in einem anderen Reaktionsbehältnis (beispielsweise einem Rührkessel, Rohrreaktor oder Schlaufenreaktor) gemäß den Schritten (β) und (γ) mit Alkylenoxiden und Kohlendioxid umgesetzt.

Bei Reaktionsführung in einem Rohrreaktor werden die gemäß Schritt (α) vorbereitete Mischung oder die gemäß der Schritte (α) und (β) aktivierte Mischung und gegebenenfalls Starter sowie Alkylenoxide und Kohlendioxid kontinuierlich durch ein Rohr gepumpt. Bei Verwendung einer gemäß Schritt (α) vorbereiteten Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner können je nach gewünschtem Polymer variieren.

In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge der Alkylenoxide kann am Eingang des Reaktors eingebracht werden. Die Restmenge der Alkylenoxide wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabführ verbessern. Bevorzugt wird durch die Mischelemente zudosiertes $CO_2$ und/oder Alkylenoxide mit der Reaktionsmischung vermischt. In einer alternativen Ausführungsform können verschiedene Volumenelemente der Reaktionsmischung miteinander vermischt werden.

Diskontinuierlich oder kontinuierlich betriebene Rührkessel oder Schlaufenreaktoren können ebenfalls zur Herstellung von halogenhaltigen Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Bei Reaktionsführung in einem kontinuierlich betriebenen Rührkessel oder einem Schlaufenreaktor werden die Reaktanden kontinuierlich durch einen kontinuierlich betriebenen Rührkessel oder einen Schlaufenreaktor gepumpt. Bei Verwendung einer gemäß Schritt (α) vorbereiteten Mischung erfolgt die zweite Aktivierungsstufe gemäß Schritt (β) gleichzeitig zu der Terpolymerisation gemäß Schritt (γ) in dem kontinuierlich betriebenen Rührkessel oder einem Schlaufenreaktor. Die molaren Verhältnisse der Reaktionspartner können je nach gewünschtem Polymer variieren. Der Einsatz eines kontinuierlich betriebene Rührkessel oder Schlaufenreaktors ist insbesondere deshalb von Vorteil, weil hier in Schritt (γ) oder in den Schritten (β) und (γ) eine Rückvermischung realisiert werden kann, so dass die Konzentration an freien Alkylenoxiden in der Reaktionsmischung im optimalen Bereich, vorzugsweise im Bereich > 0 bis ≤ 40 Gew.%, besonders bevorzugt > 0 bis ≤ 25 Gew.%, höchst bevorzugt > 0 bis < 15 Gew.% (jeweils bezogen auf das Gewicht der Reaktionsmischung) gehalten werden kann.

Weiterhin hat der Einsatz eines kontinuierlich betriebenen Rührkessels oder eines Schlaufenreaktors den Vorteil, dass die Seitenketten statistisch mit gleichbleibender Wahrscheinlichkeit in die Polymerkette eingebaut werden, was besonders vorteilhafte Produkteigenschaften wie beispielsweise besonders niedrige Viskositäten ergibt.

Bevorzugt werden die Polyethercarbonatpolyole in einem kontinuierlichen Verfahren hergestellt. Dieses kann sowohl eine kontinuierliche Copolymerisation als auch eine kontinuierliche Zugabe der einen oder mehreren H-funktionellen Startersubstanz(en) umfassen. Gegenstand der Erfindung ist daher auch ein Verfahren wobei in Schritt (γ) eine oder mehrere H-funktionelle Startersubstanz(en), DMC-Katalysator sowie mindestens zwei Alkylenoxid(e), wobei mindestens eines halogenhaltig ist, in Gegenwart von Kohlendioxid ("Copolymerisation") kontinuierlich in den Reaktor dosiert werden und wobei eine Teilmenge des resultierenden Reaktionsgemisches (enthaltend das Reaktionsprodukt) kontinuierlich aus dem Reaktor entfernt wird. Vorzugsweise wird dabei in Schritt (γ) der DMC-Katalysator in H-funktioneller Starterverbindung suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktanten, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu

einem vorherigen Punkt im Verfahren zurückgeführt wird, wodurch durch inkrementelle Zugaben bewirkte Diskontinuitäten geglättet werden.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet werden, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch kann am Ende der Nachreaktionszeit bzw. am Ausgang des nachgeschalteten Reaktors vorzugsweise weniger als 0,05 Gew.% Alkylenoxide enthalten. Die Nachreaktionszeit bzw. die Verweilzeit im nachgeschalteten Reaktor beträgt bevorzugt 10 min bis 24 h, besonders bevorzugt 10 min bis 3 h.

Die Suspensionsmittel, die in Schritt (α) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (α) zum Suspendieren des Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxcpan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring eingesetzt. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Für den Aufbau der Polymerketten der niedrigviskosen Polyethercarbonatpolyole werden H-funktionelle Starterverbindungen (Starter) mit für die Alkoxylierung aktiven H-Atomen eingesetzt. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung werden beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkoholen, Thioalkoholen, Hydroxyestern, Polyetherpolyolen, Polyesterpolyolen, Polyesteretherpolyolen, Polyethercarbonatpolyolen, Polycarbonatpolyolen, Polycarbonaten, Polyethyleniminen, Polyetheraminen (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofuranen (z. B. PolyTHF® der BASF, wie z. B. PolyTHF® 250, 650S, 1000, 1000S, 1400, 1800, 2000), Polytetrahydrofuranaminen (BASF Produkt Polytetrahydrofuranamin 1700), Polyetherthiolen, Polyacrylatpolyolen, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel 2 OH-Gruppen pro Molekül enthalten, eingesetzt. Beispielhaft handelt es sich bei den C1-C24 Alkyl-Fettsäureester, die im Mittel 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen können zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole, sowie alle Modifizierungsprodukte dieser zuvorgenannten Alkohole mit unterschiedlichen Mengen an $\varepsilon$-Caprolacton geeignet sein.

Die H-funktionellen Starterverbindungen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem

Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solche mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol oder Gemische aus den genannten Alkoholen verwendet. Werden als Alkoholkomponente zweiwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Desweiteren können als H-funktionelle Starterverbindungen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole und/oder Polyetherestercarbonatpolyole als H-funktionelle Starterverbindungen eingesetzt werden. Insbesondere können Polyetherestercarbonatpolyole, die nach dem hier beschriebenen erfindungsgemäß einsetzbaren Verfahren erhältlich sind, eingesetzt werden. Diese als H-funktionelle Starterverbindungen eingesetzten Polyetherestercarbonatpolyole werden hierzu in einem separaten Reaktionsschritt zuvor hergestellt.

Die H-funktionellen Starterverbindungen weisen im Allgemeinen eine OH-Funktionalität (d.h. Anzahl an für die Polymerisation aktiven H-Atomen pro Molekül) von 0,8 bis 3, bevorzugt von 0,9 bis 2,1 und besonders bevorzugt von 0,95 bis 2,05 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole mit einer Zusammensetzung nach der allgemeinen Formel (III),

$$HO\text{-}(CH_2)x\text{-}OH \qquad (III)$$

wobei x eine Zahl von 1 bis 20, bevorzugt eine ganze Zahl von 2 bis 20 ist. Beispiele für Alkohole gemäß Formel (III) sind Ethylenglykol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol und Umsetzungsprodukte der Alkohole gemäß Formel (III) mit ε-Caprolacton. Weiterhin bevorzugt werden als H-funktionelle Starterverbindungen Wasser, Diethylenglykol, Dipropylenglykol und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, difunktionelle Polyetherpolyole, wobei das Polyetherpolyol aus einer di-H-funktionellen Starterverbindung und Propylenoxid bzw. einer di-H-funktionellen Starterverbindung, Propylenoxid und Ethylenoxid aufgebaut ist. Die Polyetherpolyole weisen bevorzugt eine OH-Funktionalität von 0,9 bis 2,1 und ein Molekulargewicht $M_n$ im Bereich von 62 bis 4500 g/mol und insbesondere ein Molekulargewicht $M_n$ im Bereich von 62 bis 3000 g/mol auf.

Als Katalysator für die Herstellung der erfindungsgemäßen niedrigviskosen Polyethercarbonatpolyole mit Seitenketten wird, vorzugsweise ein DMC-Katalysator (Doppel-Metall-cyanid-Katalysator) eingesetzt. Es können zusätzlich oder alternativ auch andere Katalysatoren für die Copolymerisation von Alkylenoxiden und $CO_2$ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren sind aus dem Stand der Technik zur Homopolymerisation von Alkylenoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086 A1, WO 98/16310 A1 und WO 00/47649 A1 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrerer organischer Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

$$M(X)n \qquad (IV)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze weisen eine Zusammensetzung nach der allgemeinen Formel (V) auf,

$$Mr(X)_3 \qquad (V)$$

wobei

M ausgewählt ist aus den Metallkationen $Fe^{3+}$, $Al^{3+}$, $Co^{3+}$ und $Cr^{3+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalat ist und

r ist 1, wenn X = Halogenid, Hydroxid, Carboxylat, Cyanat, Thiocyanat, Isocyanat, Isothiocyanat oder Nitrat ist,

oder geeignete Metallsalze weisen eine Zusammensetzung nach der allgemeinen Formel (VI) auf,

M(X)s (VI)

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Carboxylat, Cyanat, Thiocyanat, Isocyanat, Isothiocyanat oder Nitrat ist,

oder geeignete Metallsalze weisen eine Zusammensetzung nach der allgemeinen Formel (VII) auf,

M(X)t (VII)

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VIII) auf,

(Y)a M'(CN)b (A)c (VIII)

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit einer Zusammensetzungen nach der allgemeinen Formel (IX),

Mx[M'x,(CN)y]z (IX)

worin M wie in Formel (IV) bis (VII) und

M' wie in Formel (IIX) definiert ist, und

x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, *n*-Butanol, *iso*-Butanol, *sek*-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-*tert*-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly (acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von 20 - 100°C und bei Drücken von 0,1 mbar bis Normaldruck (1013 mbar) getrocknet.

Ein besonders bevorzugtes Verfahren zur Isolierung der erfindungsgemäßen DMC-Katalysatoren aus der Suspension durch Filtration, Filterkuchenwäsche und Trocknung wird zum Beispiel in der WO-A 01/80994 beschrieben.

Bei den halogenhaltigen Alkylenoxiden handelt es sich bevorzugt um $\alpha,\beta$-Epoxy-$\gamma$-halogenalkane der Formel (I)

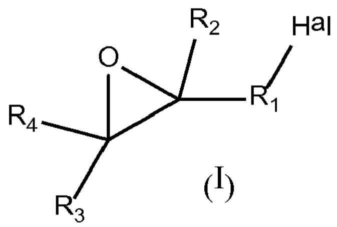

(I)

wobei

Hal für Chlor, Brom oder Iod,

R1 für einen C1-C22 Alkylenrest, vorzugsweise um einen Methylenrest und

R2, R3 und R4 für Wasserstoff oder einen C1-C4 Alkylrest, vorzugsweise für Wasserstoff stehen.

Bevorzugt ist Epichlorhydrin, Epibromhydrin und Epiiodhydrin, ganz besonders bevorzugt Epichlorhydrin.

Halogenfreie Alkylenoxide sind Ethylenoxid, Propylenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Vinylcyclohexenoxid, Cycloheptenoxid, Cyclooctenoxid, Styroloxid, Methylstyroloxid, Pinenoxid, ein- oder mehrfach Alkylenoxidierte Fette als Mono-, Di-und Triglyceride, Alkylenoxidierte Fettsäuren, C1-C24-Ester Alkylenoxidierter Fettsäuren, Epichlorhydrin, Derivate des Glycidols wie beispielsweise Methylglycidylether, Ethylglycidylether, 2-Ethylhexylglycidylether, Allylglycidylether, Glycidylmethacrylat sowie Alkylenoxidfunktionelle Alkyoxysilane wie beispielsweise 3-Glycidyloxy-propyl-trimethoxysilan, 3-Glycidyloxy¬propyl¬triethoxysilan, 3-Glycidyloxypropyltripropoxy-silan, 3-Glycidyloxypropyl¬methyl-dimethoxysilan, 3-Glycidyl¬oxy¬propyl-ethyldiethoxysilan, 3-Glycidyl¬oxypropyl-triiso¬propoxy¬silan.

Bevorzugt ist Ethylenoxid und/oder Propylenoxid.

In einer weiteren Ausgestaltung des Verfahrens zur Herstellung der Polyethercarbonatpolyole kann der DMC-Katalysator ausgewählt sein aus der Gruppe umfassend Mx[M'x,(CN)y]z, wobei gilt: M = Zn(II), Fe(II), Co(II) oder Ni(II); M' = Co(III), Fe(III), Cr(III) oder Ir(III); und x = 3, x' = 1, y = 6 und z = 2. Diese DMC-Katalysatoren haben sich im Rahmen einer effektiven Prozessführung der Terpolymerisation im Sinne einer hohen Selektivität und eines hohen Umsatzes auch schon bei niedrigeren Temperaturen als besonders vorteilhaft erwiesen. Insbesondere kann auch ein DMC-Katalysator umfassend Zinkhexacyanocobaltat(III) eingesetzt werden.

In einer weiteren Ausgestaltung des erfindungsgemäßen Verfahrens zur Herstellung der Polyethercarbonatpolyole kann die Temperatur im Schritt (β) größer oder gleich 100 °C und kleiner oder gleich 150 °C und im Schritt (γ) größer oder gleich 60 °C und kleiner oder gleich 150 °C betragen. Der Schritt (γ) wird beispielsweise bei Temperaturen von 60 bis 150°C, vorzugsweise von 80 bis 130°C, ganz besonders bevorzugt von 90 bis 120°C durchgeführt. Werden Temperaturen unterhalb von 60°C eingestellt, kommt die Polymerisationsreaktion zum Erliegen. Bei Temperaturen oberhalb von 150°C steigt die Menge an unerwünschten Nebenprodukten stark an. Vorzugsweise liegt die Temperatur im Reaktionsschritt (γ) unterhalb der des Reaktionsschrittes (β). Dies kann zu einer schnellen Aktivierung des Katalysators und zu einer schnellen und selektiven Umsetzung im Rahmen der Polymerisationsreaktion führen.

In einer weiteren Ausführungsform des Verfahrens zur Herstellung der Polyethercarbonatpolyole kann im Schritt (β) ebenfalls Kohlendioxid zudosiert werden. Gerade die Zudosierung von Kohlendioxid im Reaktionsschritt (β) kann zu einer besseren Aktivierung des DMC-Katalysators führen, welches wiederum im folgenden Polymerisationsschritt (γ) zu einer besseren Ausbeute am gewünschten Hauptprodukt führt.

In einer weiteren Ausführungsform des Verfahrens zur Herstellung der Polyethercarbonatpolyole kann im Schritt (β) und/oder (γ) zusätzlich ein cyclisches Anhydrid zugegeben werden. Durch Einbau der cyclischen Anhydride enthält das gebildete Polyethercarbonatpolyol neben den Ethergruppen und den Carbonatgruppen zusätzlich Estergruppen. Über die Zugabe eines cyclischen Anhydrides in den Schritten (β) und/oder (γ) können beispielsweise weitere funktionelle Gruppen in das Polyethercarbonatpolyol eingebaut werden. So werden bei Verwendung ungesättigter cyclischer Anhydride Doppelbindungen entlang der Polymerkette erhalten. In einer bevorzugten Ausführungsform kann das cyclische Anhydrid Maleinsäureanhydrid umfassen.

In einer bevorzugten Ausführungsvariante kann das Verhältnis der Carbonatester- zu Ethergruppen im Polyethercarbonatpolyol ≥ 1:20 und ≤ 1:1, besonders bevorzugt ≥ 1:8 und ≤ 1:2 betragen. Dieses Verhältnis der Carbonatester- zu Ethergruppen hat sich im Rahmen der Prozessführung und Prozessökonomie als besonders vorteilhaft erwiesen. Höhere Anteile an Carbonatestergruppen können zu einer erhöhten Viskosität des Polyethercarbonatpolyols führen.

In einer bevorzugten Ausführungsform kann das Molekulargewicht $M_n$ (bestimmt mittels Gelpermeationschromatographie) des Polyethercarbonatpolyols ≥ 400 und ≤ 10'000'000 g/mol betragen. In einer besonders bevorzugten Ausführungsform kann das Molekulargewicht $M_n$ ≥ 1000 und ≤ 1'000'000 g/mol und ganz besonders bevorzugt ≥ 2000 und ≤ 10'000 g/mol betragen. Dieser Molekulargewichtsbereich ist im Rahmen des erfindungsgemäßen Verfahrens effizient und ökonomisch darstellbar und die erhaltenen Polyethercarbonatpolyole zeigen im Vergleich zu Polyethercarbonaten gemäß dem Stand der Technik bei vergleichbarem Molekulargewicht eine deutlich verringerte Viskosität. Dies verbessert in hohem Maße die technische Handhabbarkeit der erfindungsgemäßen Polyethercarbonatpolyole.

In einer besonderen erfindungsgemäßen Ausgestaltung kann die OH-Funktionalität des Polyethercarbonatpolyols ≥ 0,8 und ≤ 3,0 betragen. Die OH-Funktionalität des Polymers kann, neben der Viskosität, ein wichtiger Parameter zur Einstellung der Reaktivität der Polyethercarbonatpolyole im Rahmen weiterer Umsetzungsreaktionen sein. Die erfindungsgemäßen Polyethercarbonatpolyole mit Seitenketten weisen im Vergleich zu Polyethercarbonatpolyolen ohne Seitenketten eine geringere Viskosität bei gleicher OH-Zahl auf, wodurch die technische Handhabbarkeit verbessert wird.

In einer weiteren Ausführungsform kann der Anteil des in das Polyethercarbonatpolyol eingebauten halogenhaltigen Alkylenoxides ≥ 1 mol-% und ≤ 99 mol-% betragen.

In einer bevorzugten Ausführungsvariante des Polyethercarbonatpolyols können die halogenhaltigen und die halogenfeien Alkylenoxide nicht gleichmäßig innerhalb des Polyethercarbonatpolyols verteilt sein. Mittels des erfindungsgemäßen Verfahrens lassen sich zum einen homogene, symmetrische Terpolymere herstellen, welche zum Beispiel aus einer mittleren Struktureinheit, gebildet aus einem bifunktionellen Startermolekül und zwei daran anknüpfende Struktureinheiten, welche aus Terpolymeren bestehen, gebildet werden (siehe Schema (XI)):

Terpolymer——Starter——Terpolymer (XI)

Zur Herstellung dieser Art der Terpolymere wird während der Polymerisationsstufe die Zusammensetzung der Monomermischung konstant gehalten. Zum anderen lassen sich nach dem erfindungsgemäßen Verfahren prinzipiell auch Block-Terpolymere erhalten, welche zum Beispiel aus einer mittleren Struktureinheit, gebildet aus einem bifunktionellen Startermolekül und daran anknüpfend, jeweils unterschiedlich aufgebauten Terpolymereinheiten bestehen (siehe Schema (XII)).

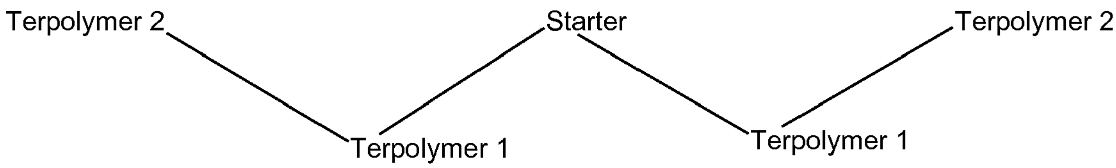


(XII)

Zur Herstellung der Block-Terpolymere kann zum Beispiel während der Polymerisationsstufe die Zusammensetzung der Monomermischung variiert werden. So lassen sich zum Beispiel Abschnitte nur mit und Abschnitte ganz ohne raumgreifende Seitenketten erhalten. Desweiteren sind Gradientenpolymere denkbar, in denen sich der Einbau der unterschiedlichen Monomerspezies im Verlauf der Kette kontinuierlich ändert. Zusätzlich kann natürlich die Änderung der Monomerkonzentration im Prozessverlauf häufiger erfolgen, sodass prinzipiell ein Polymer mit einer beliebigen Anzahl an unterschiedlichen Blöcken synthetisiert werden kann. Diese Flexibilität im Verfahren und in den erfindungsgemäßen Polyethercarbonatpolyolen kann zu einer deutlich besseren Abstimmbarkeit des Polymers und damit der Polymereigenschaften auf seinen beabsichtigten technischen Einsatzeigenschaften führen.

Die erfindungsgemäßen halogenhaltigen Polyethercarbonatpolyole können weiterhin als Starter für weitere Polymerisationsschritte, wie beispielsweise eine nachfolgende Umsetzung mit Alkylenoxiden oder mit Alkylenoxiden und Kohlendioxid eingesetzt werden.

Die erfindungsgemäßen halogenhaltigen Polyethercarbonatpolyole bilden bei der anschließenden Umsetzung der terminalen OH-Gruppen mit difunktionellen Kettenverlängerern, wie z.B. Diisocyanaten, lineare Ketten aus. Die erfindungsgemäßen halogenhaltigen Polyethercarbonatpolyole bilden bei der anschließenden Umsetzung mit höherfunktionellen Vernetzungsreagentien, wie z.B. Isocyanaten, Netzwerke aus, die je nachdem ob die Gebrauchstemperatur über oder unter der Glastemperatur liegt, Elastomer- oder Duromercharakter aufweisen. Die Elastomere können nach weiterer Umsetzung zu Formkörpern oder flächigen Gebilden (Beschichtungen, Filme) verarbeitet werden. In all diesen Ausgestaltungen führt die Verwendung von im Vergleich zum Stand der Technik niederviskosen Polyethercarbonatpolyolen zu einer deutlichen Verbesserung der technischen Handhabbarkeit.

In einer erfindungsgemäßen Ausführungsform der obigen Verwendung wird das Polyethercarbonatpolyol daher mit Di- und/oder Polyisocyanaten umgesetzt. Die nach dem erfindungsgemäßen Verfahren erhältlichen niedrigviskosen Polyethercarbonatpolyole mit Seitenketten können problemlos verarbeitet werden, insbesondere durch Umsetzung mit Di-und/oder Polyisocyanaten zu Polyurethanen, insbesondere zu Polyurethan-Weichschaumstoffen, Polyurethan-Hartschaumstoffen, Polyurethan-Elastomeren oder Polyurethan-Beschichtungen.Die erfindungsgemäßen halogenhaltigen oder phosphorhaltigen Polyethercarbonatpolyole können weiterhin als interne Weichmacher beispielsweise für PVC und Kautschuke, insbesondere für NBR-und CR-Kautschuke eingesetzt werden. Die Verwendung der erfindungsgemäßen Polyethercarbonatpolyole bei der Herstellung solcher Materialien umfassend as duromere oder elastomere Netzwerke führt zu einer Verbesserung der Werkstoffeigenschaften, wie z.B. erniedrigte Einfriertemperatur, erhöhtes Formveränderungsvermögen, erhöhte elastische Eigenschaften, verringerte Härte, ggf. gesteigertes Haftvermögen und verbesserte Verarbeitbarkeit. Ohne an eine Theorie gebunden zu sein, ist dies auf die Wirkung der Seitenketten als interne Weichmacher zurückzuführen. Für Kautschuke, welche niedrigviskose Polyethercarbonatpolyole als Weichmacher enthalten, bestehen eine Vielzahl von Anwendungsmöglichkeiten im gummitechnischen Bereich, insbesondere als Material für Kabelummantelungen, Schläuche, Dichtungen, Membranen, Schuhsohlen, Bodenbeläge, Dämpfungseinrichtungen. Durch Einsatz solcher interner Weichmacher bleiben die aus den Polyethercarbonatpolyolen hergestellten Materialien dauerhaft weich und es kommt nicht zu einem Ausdiffundieren des Weichmachers.

Demzufolge kann das erfindungsgemäße halogenhaltigen Polyethercarbonatpolyol in Wasch- und Reinigungsmittelformulierungen, als Weichmacher, Bohrflüssigkeiten, Kraftstoffadditiven, ionischen und nicht-ionischen Tensiden, Schmiermitteln, Prozesschemikalien für die Papier- oder Textilherstellung, kosmetischen Formulierungen oder als Porenbildner bei der Herstellung von Keramiken Verwendung finden. In all diesen Anwendung bietet der Einsatz der Polyethercarbonatpolyole mit Seitenketten Verarbeitungsvorteile im Vergleich zum dem im Stand der Technik genannten Polyethercarbonatpolyolen.

Eine erste Ausführung der Erfindung betrifft ein Verfahren zur Herstellung von Polyoxyalkylenpolyolen, umfassend den Schritt der Reaktion eines Alkylenoxids mit Kohlendioxid in Gegenwart einer H-funktionellen Starterverbindung und eines Doppelmetallcyanid-Katalysators, dadurch gekennzeichnet, dass die Reaktion weiterhin in Gegenwart eines α,β-Epoxy-γ-halogenalkans durchgeführt wird.

Eine zweite Ausführung der Erfindung betrifft ein Verfahren gemäß der ersten Ausführung, wobei das α,β-Epoxy-γ-halogenalkan Epichlorhydrin, Epibromhydrin und/oder Epiiodhydrin, bevorzugt Epichlorhydrin umfasst.

Eine dritte Ausführung der Erfindung betrifft ein Verfahren gemäß der ersten oder zweiten Ausführung, wobei das Alkylenoxid Ethylenoxid und/oder Propylenoxid umfasst.

Eine vierte Ausführung der Erfindung betrifft ein Verfahren gemäß einer der ersten bis dritten Ausführung, wobei das Alkylenoxid und das α,β-Epoxy-γ-halogenalkan in einem molaren Verhältnis > 99:1 bis ≤ 50:50, bevorzugt von > 95:5 bis ≤ 50:50.

Eine fünfte Ausführung der Erfindung betrifft ein Verfahren gemäß einer der ersten bis vierten Ausführung, wobei die H-funktionelle Starterverbindung ein Polyol umfasst.

Eine sechste Ausführung der Erfindung betrifft ein Verfahren gemäß einer der ersten bis fünften Ausführung, wobei die Reaktion in einem Reaktor durchgeführt wird und

(α) ein Suspensionsmittel, das keine H-funktionellen Gruppen enthält, in dem Reaktor vorgelegt wird und

(γ) eine oder mehrere H-funktionelle Startersubstanzen während der Reaktion kontinuierlich in den Reaktor zudosiert werden.

Eine siebte Ausführung der Erfindung betrifft ein Verfahren gemäß einer der ersten bis fünften Ausführung, wobei beim Vorlegen des Suspensionsmittels keine H-funktionelle Startersubstanz im Reaktor vorgelegt wird oder eine Teilmenge der H-funktionellen Startersubstanz im Reaktor vorgelegt wird.

Eine achte Ausführung der Erfindung betrifft ein Verfahren gemäß der sechsten oder siebten Ausführung, wobei in Schritt (α) das Suspensionsmittel gemeinsam mit einem Doppelmetallcyanid-Katalysator vorgelegt wird.

Eine neunte Ausführung der Erfindung betrifft ein Verfahren gemäß der achten Ausführung, wobei anschließend an den Schritt (α)

(β) zu dem Gemisch aus Schritt (α) eine Teilmenge an Alkylenoxid bei Temperaturen von 90 bis 150 °C zugegeben und danach die Zugabe des Alkylenoxids unterbrochen wird.
Eine zehnte Ausführung der Erfindung betrifft ein Verfahren gemäß der neunten Ausführung wobei im Schritt (β)

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

Eine elfte Ausführung der Erfindung betrifft ein Verfahren gemäß einer der sechsten bis zehnten Ausführung, wobei im Schritt (γ) die Dosierung der H-funktionellen Startersubstanzen zeitlich vor der Zugabe des Alkylenoxids beendet wird.

Eine zwölfte Ausführung der Erfindung betrifft ein Verfahren gemäß einer der sechsten bis elften Ausführung, wobei im Schritt Schritt (γ) die Dosierung des α,β-Epoxy-γ-halogenalkans und des Kohlendioxids gleichzeitig erfolgt.

Eine dreizehnte Ausführung der Erfindung betrifft ein Polyoxyalkylenpolyol, erhältlich durch ein Verfahren gemäß einem der ersten bis zwölften Ausführung.

Eine vierzehnte Ausführung der Erfindung betrifft ein Polyoxyalkylenpolyol gemäß der dreizehnten Ausführung mit einem Gehalt von aus dem α,β-Epoxy-γ-halogenalkan stammenden Einheiten von ≥ 1 mol-% bis ≤ 30 mol-% bevozugt von ≥ 3 mol-% bis ≤ 15 mol%.

Eine fünfzehnte Ausführung der Erfindung betrifft ein Polyurethanpolymer erhältlich durch Reaktion umfassend ein erfindungsgemäßes Polyoxyalkylenpolyol gemäß einer der dreizehnten bis vierzehnten Ausführung mit einer Isocyanatkomponente umfassend ein Polyisocyanat.

Eine sechzehnte Ausführung der Erfindung betrifft ein Polyoxyalkylenpolymer, erhältlich aus der Reaktion einer

Reaktionsmischung umfassend ein Polyoxyalkylenpolyol gemäß einer der dreizehnten bis fünfzehnten Ausführung unter Zugabe eines Initiators ausgewählt aus der Gruppe der Photoinitiatoren, metallaktivierten Peroxiden und/oder Redoxinitiatoren.

Eine achtzehnte Ausführung der Erfindung betrifft ein Polyoxyalkylenpolyol gemäß der dreizehnten oder vierzehnten Ausführung mit einem CO2-Gehalt von ≥ 5 Gewichts-% bis ≤ 15 Gewichts-%.

## Beispiele

Die Erfindung wird anhand der nachfolgenden Beispiele näher beschrieben, ohne jedoch darauf beschränkt zu sein.

Eingesetzte H-funktionelle Starterverbindungen (Starter):

PET-1 difunktionelles Poly(oxypropylen)polyol mit einer OH-Zahl von 112 $mg_{KOH}/g$

Der DMC-Katalysator wurde hergestellt nach Beispiel 6 von WO-A 01/80994.

Epichlorhydrin (ECH), Reinheit 99 %, Fluka

Kohlenstoffdioxid (CO2), Reinheit 99,995 %, Westfalen

Propylenoxid (PO), Reinheit 99,9 %, Chemogas GmbH

| | |
|---|---|
| HDI-Trimer | Triisocyanat mit einer durchschnittlichen molaren NCO-Funktionalität von 3,4 Desmodur N3300 der Covestro AG, Äquivalentgewicht 192 g/mol, NCO-Gehalt 21,7 Gew.-% |
| DBTL | Dibutylzinndilaurat der Firma Sigma Aldrich, Reinheit > 95 % |

Der in den Beispielen eingesetzte 300 ml Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [Schritt (β)] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [Schritt (β)] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Schritt (γ)] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf mit einem Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas abgesaugt wurde und über die Hohlwelle des Rührers in die Reaktionsmischung eingeleitet wurde.

Die Charakterisierung des Reaktionsgemisches erfolgte durch $^1$H-NMR Spektroskopie.

Der Anteil der nicht umgesetzten Monomere (Propylenoxid $R_{PO}$, Epichlorhydrin $R_{ECH}$ in mol%) wurden mittels $^1$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel)

gereinigte Reaktionsmischung wurde am unteren Ende des beheizten Rohres in einer Vorlage aufgefangen.

Die relevanten Resonanzen im $^1$H-NMR Spektrum (bezogen auf TMS = 0 ppm), die zur Integration verwendet wurden, sind wie folgt:

I1: 1,10 - 1,17 ppm: Methylgruppe der Polyether-Einheiten, Fläche der Resonanz entspricht drei H Atomen,

I2: 1,25 - 1,34 ppm: Methylgruppe der Polycarbonat-Einheiten, Fläche der Resonanz entspricht drei H Atomen,

I3: 1,45 - 1,48 ppm: Methylgruppe des cyclischen Carbonats, Fläche der Resonanz entspricht drei H Atomen,

I4: 2,82 - 3,85 ppm: CH Gruppe für freies, nicht abreagiertes Epichlorhydrin, Fläche der Resonanz entspricht einem H Atom"

I5: 2,95 - 3,00 ppm: CH Gruppe für freies, nicht abreagiertes Propylenoxid, Fläche der Resonanz entspricht einem H Atom,

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{ECH} = [I4 / ((I1/3)+(I2/3)+(I3/3)+I4+I5))] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [I5 / ((I1/3)+(I2/3)+(I3/3)+I4+I5))] \times 100\%$$

Der Anteil (Gew.-%) von in das Polymer eingebautem $CO_2$ wurden mittels $^1$H-NMR Spektroskopie bestimmt.

$$CO_2\text{-Einbau} = [I2*102/ ((I1/3)*58+(I2/3)*102))] \times 100\%$$

Das Zahlenmittel $M_n$ und das Gewichtsmittel $M_w$ des Molekulargewichts der entstandenen Polymere wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2×PSS SDV linear M, 8×300 mm, 5 µm; RID-Detektor). Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Polyetherthiocarbonatpolyol].

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polythioethercarbonatpolyol (0,1 g) wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

Für die rheologische Bestimmung des Gel-Punktes für das Polyurethanpolymer wurden die Polythioethercarbonatpolyole mit einer äquimolaren Menge an Desmodur N3300 (Hexamethylendiisocyanat-Trimer) und 2000 ppm Dibutylzinnlaurat (2% in Diphenylether) versetzt. Die komplexen Moduli G' (Speichermodul) und G" (Verlustmodul) wurden in einer Oszillationsmessung bei 40°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde definiert als der Zeitpunkt, an dem G' = G" wurde.

**Beispiel 1: Herstellung eines halogenhaltigen Polyoxyalkylencarbonatpolyols durch Polymerisation von Propylenoxid, 13,5 mol-% Epichlorhydrin und $CO_2$**

[erste Aktivierungsstufe, Schritt (α)]

In einem 300 ml Druckreaktor ausgestattet mit Gaseintragsrührer wurde eine Mischung aus DMC-Katalysator (27 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem Ar-Strom gerührt (800 U/min).

[zweite Aktivierungsstufe, Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,0 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 3,0 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators

[Polymerisationsstufe, Schritt (γ)]

Nach Abkühlen auf 105°C wurden unter weiterem Rühren weitere 38,0 g Propylenoxid über eine HPLC-Pumpe (0,91 mL/min) zudosiert. 10,5 min nach Start der Zugabe von Propylenoxid wurde gleichzeitig 12 g Epichlorhydrin über eine HPLC-Pumpe (0,26 mL/min) zudosiert. Anschließend wurde die Reaktionsmischung weitere 1 h bei 105°C gerührt. Die Reaktion wurde durch Kühlung des Reaktors mit Eiswasser gestoppt, der Überdruck wurde abgelassen und das resultierende Produkt analysiert.

Der molare Anteil des nicht umgesetzten Propylenoxids ($R_{PO}$ in mol%) betrugt 4,0 % und des nicht umgesetzten Epichlorhydrins ($R_{ECH}$ in mol%) betrugt 3,0%.

Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 1 angegeben.

**Beispiel 2: Herstellung eines halogenhaltigen Polyoxyalkylencarbonatpolyols durch Polymerisation von Propylenoxid, 6,5 mol-% Epichlorhydrin und $CO_2$**

[erste Aktivierungsstufe, Schritt (α)]

In einem 300 ml Druckreaktor ausgestattet mit Gaseintragsrührer wurde eine Mischung aus DMC-Katalysator (27 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem Ar-Strom gerührt (800 U/min).

[zweite Aktivierungsstufe, Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,0 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 3,0 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators

[Polymerisationsstufe, Schritt (γ)]

Nach Abkühlen auf 105°C wurden unter weiterem Rühren weitere 45,0 g Propylenoxid über eine HPLC-Pumpe (0,91 mL/min) zudosiert. 10,5 min nach Start der Zugabe von Propylenoxid wurde gleichzeitig 6,0 g Epichlorhydrin über

eine HPLC-Pumpe (0,26 mL/min) zudosiert. Anschließend wurde die Reaktionsmischung weitere 1 h bei 105°C gerührt. Die Reaktion wurde durch Kühlung des Reaktors mit Eiswasser gestoppt, der Überdruck wurde abgelassen und das resultierende Produkt analysiert.

Der molare Anteil des nicht umgesetzten Propylenoxids ($R_{PO}$ in mol%) betrugt 1,4 % und des nicht umgesetzten Epichlorhydrins ($R_{ECH}$ in mol%) betrugt 1,1%.

Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 1 angegeben.

**Beispiel 3 (Vergleich): Versuch der Herstellung eines halogenhaltigen Polyoxyalkylenpolyols durch Polymerisation von Propylenoxid und 13,5 mol-% Epichlorhydrin**

[erste Aktivierungsstufe, Schritt (α)]

In einem 300 ml Druckreaktor ausgestattet mit Gaseintragsrührer wurde eine Mischung aus DMC-Katalysator (27 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem Ar-Strom gerührt (800 U/min).

[zweite Aktivierungsstufe, Schritt (β)]

Es wurde 2 bar Ar aufgepresst. Es wurden 3,0 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 3,0 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators

[Polymerisationsstufe, Schritt (γ)]

Nach Abkühlen auf 105°C wurden unter weiterem Rühren weitere 39,0 g Propylenoxid über eine HPLC-Pumpe (0,91 mL/min) zudosiert. 10,5 min nach Start der Zugabe von Propylenoxid wurde gleichzeitig 12,0 g Epichlorhydrin über eine HPLC-Pumpe (0,26 mL/min) zudosiert. Anschließend wurde die Reaktionsmischung weitere 1 h bei 105°C gerührt. Zehn Minuten nach Beginn der Zugabe von Epichlorhydrin wurde die Reaktion durch Kühlung des Reaktors mit Eiswasser gestoppt, da keine Reaktion beobachtet wurde.

**Beispiel 4 (Vergleich): Versuch der Herstellung eines halogenhaltigen Polyoxyalkylenpolyols durch Polymerisation von Epichlorhydrin**

[erste Aktivierungsstufe, Schritt (α)]

In einem 300 ml Druckreaktor ausgestattet mit Gaseintragsrührer wurde eine Mischung aus DMC-Katalysator (27 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem Ar-Strom gerührt (800 U/min).

[zweite Aktivierungsstufe, Schritt (β)]

Es wurden 2 bar Ar aufgepresst. Es wurden 3,0 g Epichlorhydrin mit Hilfe einer HPLC-Pumpe (1 mL/min) zu dosiert und die Reaktionsmischung für 20 min gerührt (800 rpm). Es trat keine kurzzeitig erhöhte Wärmeentwicklung im Reaktor während dieser Zeit auf, die eine Aktivierung des Katalysators angezeigt hätte. Anschließend wurden noch zwei weitere mal 3,0 g Epichlorhydrin mit Hilfe der HPLC-Pumpe (1 ml/min) zudosiert und die Reaktionsmischung für 20 min gerührt (800 rpm). Es wurde die Reaktion durch Kühlung des Reaktors mit Eiswasser gestoppt, da keine Reaktion beobachtet wurde.

**Tabelle:** Übersicht der Resultate der Herstellung von Polyoxyalkylencarbonatpolyolen

| Beispiel | Reaktion | $CO_2$-Einbau | ECH-Einbau | $M_n$ | PDI | OH-Zahl |
|---|---|---|---|---|---|---|
| | [-] | [Gew.-%] | [mol-%] | [g/mol] | | [$mg_{KOH} \cdot g^{-1}$] |
| **1** | Terpolymerization von PO/13,5 mol-% ECH/$CO_2$ | 7,7 | 5,8 | 3286 | 1,21 | 40,2 |
| **2** | Terpolymerization von PO/6,5 mol-% ECH/$CO_2$ | 9,2 | 3,2 | 3324 | 1,23 | 46,0 |
| **3 (Vgl.)** | Copolymerization von PO/13,5 mol-% ECH | Es wurde kein Produkt erhalten | | | | |
| **4 (Vgl.)** | Homopolymerization von ECH | Es wurde kein Produkt erhalten | | | | |
| Vgl.: Vergleichsbeispiel<br>ECH: Epichlorhydrin | | | | | | |

Die Vergleichsbeispiele 3-4 belegen, dass im Falle einer Copolymerisation in Gegenwart von Epichlorhydrin und Abwesenheit von Kohlendioxid kein Polymer bei der mit DMC-Katalysator katalysierten Polymerisation gebildet wird. Wie Beispiel 1-2 zeigt, ist der verwendete DMC-Katalysator, wenn die Monomermischung Epichlorhydrin enthält, nur dann aktiv, wenn zusätzlich Kohlendioxid als Comonomer eingesetzt wird.

Beispiel 5: Herstellung eines Polyurethans unter Einsatz eines Polyoxyalkylencarbonatpolyols aus Beispiel 1 (PEC-1) und HDI Trimer

In einem Aluminium-Becher wurden PEC-1 (2,0 g), HDI (276 mg) und DBTL (1 Gew.-%, 22,8 mg) vermischt. Anschließend wurde eine Probe der Mischung (0,4 g) für die Messung auf dem Rheometer eingesetzt und für drei Stunden auf 40 °C erhitzt.

Der NCO Index betrug 1,0.

Die Gelzeit betrug 17,2 min.

Beispiel 6: Herstellung eines Polyurethans unter Einsatz eines P Polyoxyalkylencarbonatpolyols aus Beispiel 2 (PEC-2) und HDI Trimer

In einem Aluminium-Becher wurden PEC-2 (2,0 g), HDI (317 mg) und DBTL (1 Gew.-%, 23,2 mg) vermischt. Anschließend wurde eine Probe der Mischung (0,4 g) für die Messung auf dem Rheometer eingesetzt und für drei Stunden auf 60 °C erhitzt.

Der NCO Index betrug 1,0.

Die Gelzeit betrug 15,3 min.

## Patentansprüche

1. Verfahren zur Herstellung von Polyoxyalkylenpolyolen, umfassend den Schritt der Reaktion eines Alkylenoxids mit Kohlendioxid in Gegenwart einer H-funktionellen Starterverbindung und eines Doppelmetallcyanid-Katalysators, **dadurch gekennzeichnet, dass**
die Reaktion weiterhin in Gegenwart eines $\alpha$,$\beta$-Epoxy-$\gamma$-halogenalkans durchgeführt wird.

2. Verfahren gemäß Anspruch 1, wobei das $\alpha$,$\beta$-Epoxy-$\gamma$-halogenalkan Epichlorhydrin, Epibromhydrin und/oder Epiiodhydrin, bevorzugt Epichlorhydrin umfasst.

3. Verfahren gemäß Anspruch 1 oder 2, wobei das Alkylenoxid Ethylenoxid und/oder Propylenoxid umfasst.

4. Verfahren gemäß einem der Ansprüche 1 bis 3, wobei das Alkylenoxid und das $\alpha$,$\beta$-Epoxy-$\gamma$-halogenalkan in einem molaren Verhältnisse von $\geq$ 99:1 bis $\leq$ 50:50, bevorzugt von $\geq$ 95:5 bis $\leq$ 50:50 eingesetzt werden.

5. Verfahren gemäß einem der Ansprüche 1 bis 4, wobei die H-funktionelle Starterverbindung ein Polyol umfasst.

6. Verfahren gemäß einem der Ansprüche 1 bis 5, wobei die Reaktion in einem Reaktor durchgeführt wird und

(α) ein Suspensionsmittel, das keine H-funktionellen Gruppen enthält, in dem Reaktor vorgelegt wird und
(γ) eine oder mehrere H-funktionelle Startersubstanzen während der Reaktion kontinuierlich in den Reaktor zudosiert werden.

7. Verfahren gemäß einem der Ansprüche 1 bis 5, wobei beim Vorlegen des Suspensionsmittels keine H-funktionelle Startersubstanz im Reaktor vorgelegt wird oder eine Teilmenge der H-funktionellen Startersubstanz im Reaktor vorgelegt wird.

8. Verfahren gemäß Anspruch 6 oder 7, wobei in Schritt (α) das Suspensionsmittel gemeinsam mit einem Doppelmetallcyanid-Katalysator vorgelegt wird.

9. Verfahren gemäß Anspruch 8, wobei anschließend an den Schritt (α)

(β) zu dem Gemisch aus Schritt (α) eine Teilmenge an Alkylenoxid bei Temperaturen von 90 bis 150 °C zugegeben und danach die Zugabe des Alkylenoxids unterbrochen wird.

10. Verfahren gemäß Anspruch 9, wobei im Schritt (β)

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

11. Verfahren gemäß einem der Ansprüche 6 bis 10, wobei im Schritt (γ) die Dosierung der H-funktionellen Startersubstanzen zeitlich vor der Zugabe des Alkylenoxids beendet wird.

12. Verfahren gemäß einem der Ansprüche 6 bis 11, wobei im Schritt (γ) die Dosierung des α,β-Epoxy-γ-halogenalkans und des Kohlendioxids gleichzeitig erfolgt.

13. Polyoxyalkylenpolyol, erhältlich durch ein Verfahren gemäß einem der Ansprüche 1 bis 12.

14. Polyoxyalkylenpolyol gemäß Anspruch 13 mit einem Gehalt von aus dem α,β-Epoxy-γ-halogenalkan stammenden Einheiten von ≥ 1 mol-% bis ≤ 30 mol-% bevozugt von ≥ 3 mol-% bis ≤ 15 mol%.

15. Polyurethanpolymer, erhältlich aus der Reaktion einer Polyolkomponente umfassend ein Polyoxyalkylenpolyol gemäß einem der Ansprüche 13 bis 14 mit mindestens einer Polyisocyanatkomponente.

Europäisches Patentamt
European Patent Office
Office européen des brevets

# EUROPÄISCHER RECHERCHENBERICHT

Nummer der Anmeldung
EP 17 18 0273

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2013 208328 A1 (EVONIK INDUSTRIES AG [DE]) 13. November 2014 (2014-11-13)<br>* Absätze [0001] - [0002], [0130] - [0133]; Beispiele A1,A2,A3,A4 *<br>----- | 1-15 | INV.<br>C08G18/50<br>C08G65/24<br>C08G65/26<br>C08G18/44 |
| A | US 2016/208080 A1 (LAEMMERHOLD KAI [CN] ET AL) 21. Juli 2016 (2016-07-21)<br>* Absätze [0001], [0008]; Anspruch 1 *<br>----- | 1-15 | |
| A | INOUE S ET AL: "COPOLYMERIZATION OF CARBON DIOXIDE AND EPOXIDE WITH ORGANOMETALLIC COMPOUNDS", MAKROMOLEKULARE CHEMIE, MACROMOLECULAR CHEMISTRY AND PHYSICS, WILEY - V C H VERLAG GMBH & CO. KGAA, CH, Bd. 130, Nr. 3170, 1. Januar 1969 (1969-01-01), Seiten 210-220, XP001018750, ISSN: 0025-116X, DOI: 10.1002/MACP.1969.021300112<br>* das ganze Dokument *<br>----- | 1-15 | |

| RECHERCHIERTE SACHGEBIETE (IPC) |
|---|
| C08G |

Der vorliegende Recherchenbericht wurde für alle Patentansprüche erstellt

1

| Recherchenort | Abschlußdatum der Recherche | Prüfer |
|---|---|---|
| Den Haag | 8. Januar 2018 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 17 18 0273

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2018

| Im Recherchenbericht angeführtes Patentdokument | Datum der Veröffentlichung | Mitglied(er) der Patentfamilie | Datum der Veröffentlichung |
|---|---|---|---|
| DE 102013208328 A1 | 13-11-2014 | CA 2911152 A1 | 13-11-2014 |
| | | CN 105209518 A | 30-12-2015 |
| | | DE 102013208328 A1 | 13-11-2014 |
| | | EP 2994497 A1 | 16-03-2016 |
| | | KR 20160006175 A | 18-01-2016 |
| | | US 2016053051 A1 | 25-02-2016 |
| | | WO 2014180622 A1 | 13-11-2014 |
| US 2016208080 A1 | 21-07-2016 | CN 105637013 A | 01-06-2016 |
| | | EP 3027673 A1 | 08-06-2016 |
| | | JP 2016525619 A | 25-08-2016 |
| | | KR 20160040240 A | 12-04-2016 |
| | | RU 2016107402 A | 07-09-2017 |
| | | SG 11201600626Y A | 30-03-2016 |
| | | US 2016208080 A1 | 21-07-2016 |
| | | WO 2015014732 A1 | 05-02-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 201514732 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A1
- WO 9816310 A1
- WO 0047649 A1
- JP 4145123 B
- WO 9740086 A
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- **DONALD J. DARENSBOURG et al.** *J. Am. Chem. Soc.,* 2011, vol. 133, 15191-15199
- *Macromolecules,* 2013, vol. 46, 2128-2133
- *Polymer,* 2013, vol. 54 (23), 6357-6362
- *RCS Advances,* 2014, vol. 4 (42), 21765-21771
- *Macromolecules,* 2016, vol. 49 (8), 2971-2976
- *Macromolucular Rapid Communications,* 2016, vol. 37 (9), 788-793
- *J. Mol. Catal. A,* 2013, vol. 379, 38-45
- *Beispiel Chemical Communications,* 2011, vol. 47, 141-163